(19) Europäisches Patentamt
European Patent Office
Office européen des brevets

(11) **EP 2 345 997 A1**

(12) **EUROPEAN PATENT APPLICATION**

(43) Date of publication:
**20.07.2011 Bulletin 2011/29**

(51) Int Cl.:
***G06T 7/20*** (2006.01)

(21) Application number: **10151102.0**

(22) Date of filing: **19.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicants:
• **Deutsche Thomson OHG**
  **30625 Hannover (DE)**
• **Hochschule Furtwangen**
  **78120 Furtwangen (DE)**

(72) Inventors:
• **Mueller, Stefan**
  **78048 Villingen-Schwenningen (DE)**
• **Neisse, Olaf**
  **78120 Furtwangen (DE)**

(74) Representative: **Thies, Stephan**
  **Deutsche Thomson OHG**
  **European Patent Operations**
  **Karl-Wiechert-Allee 74**
  **30625 Hannover (DE)**

(54) **Method and system for estimating motion in video images**

(57)    The present invention relates to a method (500) for processing image data. The method includes dividing (506) each of a first plurality of images corresponding to a plurality of overlapping color value ranges into a first plurality of components of contiguous pixels. Each of a second plurality of images corresponding to the plurality of overlapping color value ranges are divided (522) into a second plurality of components of contiguous pixels. A plurality of motion vectors are identified (526) that generate a smallest distance between the first plurality of components and the second plurality of components, wherein the distance comprises a difference in color values.

FIG. 5A

EP 2 345 997 A1

500

B

Compute Level Sets $\hat{L}_i$ —522

Compute Distance Between $L_i$ and $\hat{L}_i$ —524

Generate Motion Vectors —526

Select Motion Vector Giving Best Match —528

Assign Motion Vector to $L_i$ —530

—532

All
Components
$L_m$ Done

N

Y

End —534

FIG. 5B

**Description**

The present invention relates to the field of processing image data. In particular, exemplary embodiments of the present invention relate to a method and system for recovering information from images.

A video, such as a film or television program, includes a sequence of images that may present a series of images showing the same shot or scene for some period of time. There may be a significant amount of redundancy between the images for a particular scene, which may be used for image compression or data recovery. To use this redundancy, the motion of objects between frames must generally be known or calculated. An overview of various approaches to motion estimation is presented in Korkaram, A., MOTION PICTURE RESTORATION: DIGITAL ALGORITHMS FOR ARTEFACT SUPPRESSION IN DEGRADED MOTION PICTURE FILM AND VIDEO, Springer-Verlag, 1998.

In regions in which the image is damaged (including scratches, blotches, and the like), motion estimation may be used to recover lost information from other frames of the same shot. Specifically, the motion of objects affected by the destroyed area is predicted and used to recover lost pixels in the destroyed area. Methods for estimating motion in video images generally try to match blocks of pixels according to the color values of the pixels. This technique may be effective for use in image compression, but may not be as effective in image restoration.

U.S. Patent Application Pub. No. 2002/159749 by Koblansky, purports to disclose a method and apparatus for motion estimation in image-sequences with efficient content based smoothness constraint. The motion estimation technique incorporates a smoothness constraint which is strengthened for reference regions characterized by an image property that is close to that of neighboring regions. Preferably, the image property should be a normalized figure to account for inherent variability over the region.

Japanese Publication No. 2003-256849A purports to disclose an object extracting system and method and its program. An object extracting device includes an object extracting system that divides an area by another area using colors, luminance or textures or the like as references. The object extraction system then calculates the moving vector of each area and calculates the similarity of the movement of each area. The results from the similarity calculation are stored across a plurality of frames so that even when any temporarily similar movement is detected, a determination can be made as to the validity of the areas. Accordingly, the reliability of the extraction of the object may be improved. The position of the area in the next frame can be predicted from the calculation result of the movement as the reference of the area division in the next frame.

Current motion estimation techniques, such as those described above, are not well suited for predicting motion for data recovery. In current techniques, the motion vector field may have substantial fluctuation, or jitter, which makes it hard to foretell the movement of objects. Further, blotches and other disturbances interfere with the motion vector computation. Thus, a method and system for managing error detection and error correction is desirable.

Thus, a need new approach for computing motion vectors would be useful. Such techniques do not need to be suitable for compression, but should accurately capture object flow, suppress noise, and ignore artifacts.

A method for processing image data is set forth in claim 1. The method includes dividing each of a first plurality of images corresponding to a plurality of color value ranges into a first plurality of components of contiguous pixels. Each of a second plurality of images corresponding to the plurality of color value ranges may be divided into a second plurality of components of contiguous pixels. A plurality of motion vectors that generate a smallest distance between the first plurality of components and the second plurality of components may be identified, wherein the distance comprises a difference in color values.

In an exemplary embodiment, the color values represent gray scale intensity in an image. Each of the components may represent an object in an image.

In an exemplary embodiment, a component from the first plurality of components may be divided into a plurality of smaller components based at least in part on a plurality of narrower ranges. A morphological transformation may be performed on any one the first plurality of components. The morphological transformation may be performed on any one of the plurality of components that is greater than 1000 pixels in area. Each of the plurality of motion vectors may be assigned to a corresponding one of the first plurality of components. Each image of the first plurality of images may be in a sequence with an image from the second plurality of images. In an exemplary embodiment, any one of the first plurality of components that is smaller than 40 pixels in area may be discarded. Data may be restored in a video image based at least in part on the plurality of motion vectors.

A system for processing image data is set forth in claim 11. The system includes a processor, a storage device, and a tangible, machine readable memory device. The tangible, machine readable medium may include code configured to direct the processor to: access video data comprising a plurality of images on the storage device. The code may be configured to divide each of a first plurality of images corresponding to a plurality of color value ranges into a first plurality of components of contiguous pixels and divide each of a second plurality of images corresponding to the plurality of color value ranges into a plurality of sets. The code may be configured to identify a plurality of motion vectors that generate a smallest distance between the first plurality of components and the plurality of sets, wherein the distance comprises a difference in color values.

In an exemplary embodiment, the tangible, machine readable memory may include code configured to direct the processor to restore data in a video image based, at least in part, upon the plurality of motion vectors. Further, the tangible, machine readable memory may include code configured to direct the processor to assign each of the plurality of motion vectors to a corresponding one of the plurality of components.

The system may include a monitor, wherein the code may be configured to display the results of the calculations on the monitor. The system may also include a network interface card, wherein the code is configured to access video data on remote systems.

Fig. 1 is a drawing of three consecutive frames of a video showing a single scene.

Fig. 2 is a drawing of two frames in a video sequence.

Fig. 3 is a drawing of the first frame of Fig. 1 represented as a function, in accordance with an exemplary embodiment of the present techniques.

Fig. 4 is a process flow diagram of a general method for motion estimation, in accordance with an exemplary embodiment of the present techniques.

Figs. 5A and 5B show a process flow diagram of an adaptive method for estimating the motion of objects in a sequence of images, in accordance with an exemplary embodiment of the present techniques.

Fig. 6 is a set of images generated from an initial image using five level ranges, in accordance with an exemplary embodiment of the present techniques.

Fig. 7 is a larger view of the fourth image from Fig. 6, in accordance with an exemplary embodiment of the present techniques.

Fig. 8 is a set of images showing the first five components identified in the image shown in Fig. 6, in accordance with an exemplary embodiment of the present techniques.

Fig. 9 is a set of images showing the morphological filtering of the first image of Fig. 8, in accordance with an exemplary embodiment of the present technique.

Fig. 10 shows a set of images illustrating the separate components isolated by morphological filtering the of the first image in Fig. 8, in accordance with an exemplary embodiment of the present techniques.

Fig. 11 is an illustration showing the fourth image of Fig. 8 along with an associated graph of the color value distribution in the image, in accordance with an exemplary embodiment of the present techniques.

Fig. 12 is a set of six images showing the results obtained by dividing the image of Fig. 11 into the six levels shown in the graph Fig. 11, in accordance with exemplary embodiments of the present techniques.

Fig. 13 is an illustration 1300 of components in an image and in an image of comparison prior to matching, in accordance with exemplary embodiments of the present techniques.

Fig. 14 is a set of images illustrating the matching process, in accordance with an exemplary embodiment of the present techniques.

Fig. 15 is a graph of the horizontal part of a set of motion vectors calculated from Figs. 13 and 14, in accordance with an exemplary embodiment of the present techniques.

Fig. 16 is a block diagram of a computing system that may be used to implement the techniques described above, in accordance with exemplary embodiments of the present invention.

Disclosed embodiments of the present technique relate to computing stable motion vector fields, e.g., with minimal jitter, which may be used to recover missing or damaged information within an image from other images of the same scene. The techniques may be useful for restoring films damaged by blotches and scratches, as well as for other video processing techniques.

The image is not necessarily analyzed on a predefined grid. Instead, in exemplary embodiments, the color value range, which may include the intensity in a gray-scale image, is divided into smaller parts and the image may be decomposed according to the color values. Since areas of the same color values, or intensity, may often belong to the same object in an image, the movement of this area will be roughly the same through a sequence of images. Accordingly, a similar area such as an area with the same shape and same color values may be located within a comparison image, which may be used to determine motion vectors.

Depending on the choice of the color ranges, noise may not affect the computation as much as in current techniques. In other words, small blotches or imperfections may not influence the object motion estimation. The techniques work best in images in which there is mostly shifting motion, for example, low amounts of rotation or shearing, a dedicated structure that is performing the movement, such as not falling apart or coming together, and has hard transitions such as distinct borders between different objects on the picture

The present techniques may provide a motion vector field that is low in fluctuations or jitters. Accordingly, pixels of objects affected by dirt, blotches or scratches may be recognized by their temporal movement, which may help in collecting information on the undamaged color value. The restored color values may be used to restore the missing information

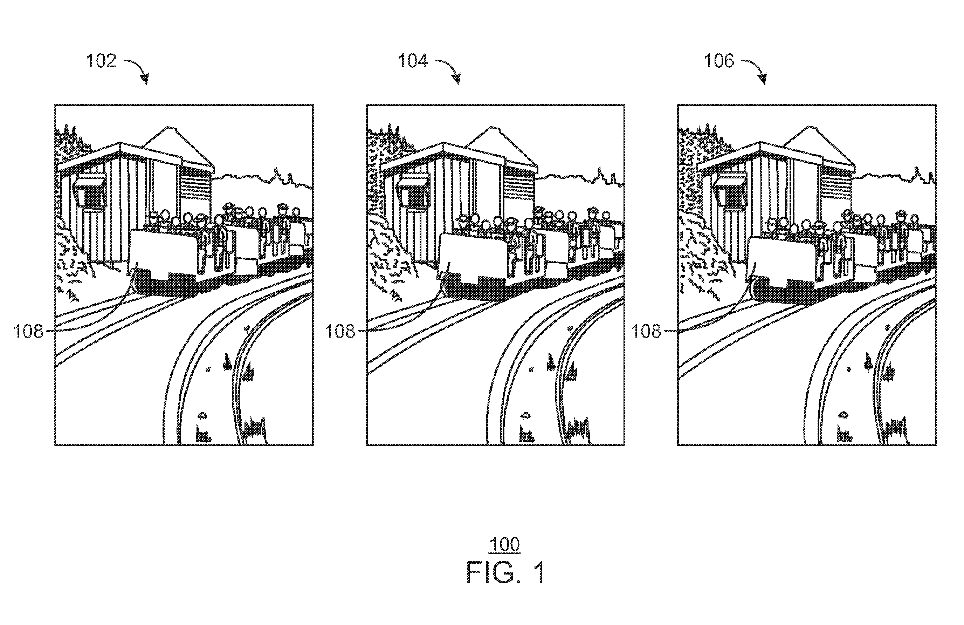

Fig. 1 is a drawing 100 of three consecutive frames 102, 104, and 106 of a video showing a single scene. As used herein, a scene is a single sequence of images in a video that have the same or nearly the same background and objects. As can be seen, there may be a substantial amount of redundancy between images in a scene, which may be used to compress or to recover lost data. One use of the redundancy may be to detect and restore scratches in old films and videos.

In many cases, there can be movement in the shot. So the shape and position of some or all objects can differ from frame to frame. For example, the location of the train 108 in the first frame 102 has changed in the second frame 104, and is further changed in the third frame 106.

In a digital image $I$, such as second frame 104, an object, such as the train 108, is presented by a set of pixels given by their position expressed as row number and column number $(r,c)$ and color value $I(r,c)$. In order to have access to the information in the frames before or after such as frames 102 and 106 the analyzed image such as the frame 104, we have to know the pixel displacement of objects within the image such as the train 108. More precisely, for each pixel location $(r,c)$ we have to compute the displacement vector $(\rho(r,c),\chi(r,c))$ for components that represent the same information. That is, the pixel location $(r+\rho(r,c),c+\chi(r,c))$ that represents $I(r,c)$ in the image of comparison, such as the neighbor frames 102 or 104, $\hat{I}$.

However, it may not be possible to match objects. Objects may be occluded or vanish between frames 102, 104, and 108, which would prevent a perfect match. Further, objects may change in color or size between frame. Thus, the transfer of information can only work to a certain degree.

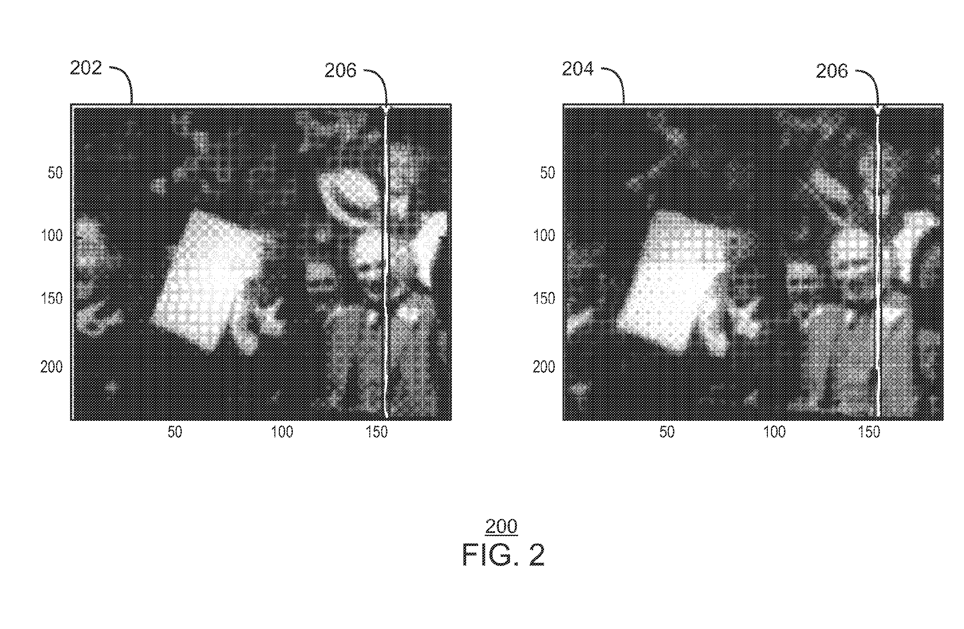

As mentioned above, exemplary embodiments of the present techniques may be used for the restoration of images affected by scratches. One may use only spatial information, analyzing the adjacent area or using patterns. However, more information gives a spatial-temporal approach using additional pixel values from vicinal frames 102, 104. Since the motion of the corrupted parts may not be able to be computed, the movement of the corrupted portions may based on the motion of the surrounding pixel area, as discussed further with respect to Fig. 2.

Fig. 2 is a drawing 200 of two frames 202 and 204 in a video sequence. As can be seen in the drawing 200, the damaged part 206 in the left frame 202 is undamaged in the right image 206. Further, the damaged part 208 in the right frame 204 is undamaged in the left frame 202. This could be applied to recover the information of an image at spots where the color value has been lost.

Usually motion in a sequence of images is smooth, i.e., objects flow in the same direction, creating a locally continuous motion vector field. However, different objects, especially in the background may have different directions of motion. Thus, the edges of objects may form break points in the motion vector field.

Motion estimation has been considered to be an issue in image processing for a number of years, as compression algorithms may benefit from effective motion estimation. Generally, most motion estimation algorithms proceed from the same equation, shown as Eqn. 1.

$$I(r,c) = \hat{I}(r + \rho(r,c), c + \chi(r,c)). \qquad \text{Eqn. 1}$$

The motion estimation algorithms focus on identifying a displacement vector $(\rho(r,c),\chi(r,c))$ such that the color values of the image, $I$, and the shifted image, $\hat{I}$, which is displaced in direction $(\rho(r,c),\chi(r,c))$, are almost even for all spots close to $(r,c)$. Thus, for a predefined block B of pixels a displacement vector $(\rho(B),\chi(B))$ may be computed such that Eqn.

2 is satisfied.

$$I(B) \approx \hat{I}(B + (\rho(B), \chi(B))).$$

Eqn. 2

Present techniques for performing motion estimation may use either a block matching, abbreviated herein as "BM", algorithm or a gradient computation algorithm. Those methods work in places where the motion vectors are similar and where there is a lot of structure. However, these methods may fail when isochromatic areas are present, because a number of possible solutions may exist. Further, noise, such as stray pixels, scratches, and the like, may affect the solution. In addition, bad motion estimates may result if the edges of objects do not move in a consistent manner with the background. Accordingly, these techniques may not work for restoration, since such techniques seek to predict the movement of the pixels damaged by a scratch independently of the motion of its surroundings.

In the description of the exemplary embodiments of the present techniques below, $I$ denotes an image of a scene and $\hat{I}$ the image of comparison of the same scene. The images have $R$ rows and $C$ columns. Thus, each pixel ($r$, $c$) has a color value $I(r,c) \in F$. It should be understood that the color value may represent any color or a gray scale value for the pixel.

Further, the present techniques generally assume that adjacent pixels with similar color values belong to the same object. In most cases, this will be the case, although color shift effects may contradict this assumption. Further, it may be assumed that objects move together as a block. Although, this may be correct for movements in which objects shift location in a scene, it may be problematic in the case of rotational or shearing motion. In exemplary embodiments, images may be decomposed image according to the color values of pixels rather than on a grid. Thus, the image may be regarded as a function, or landscape, and decomposed according to the heights of regions.

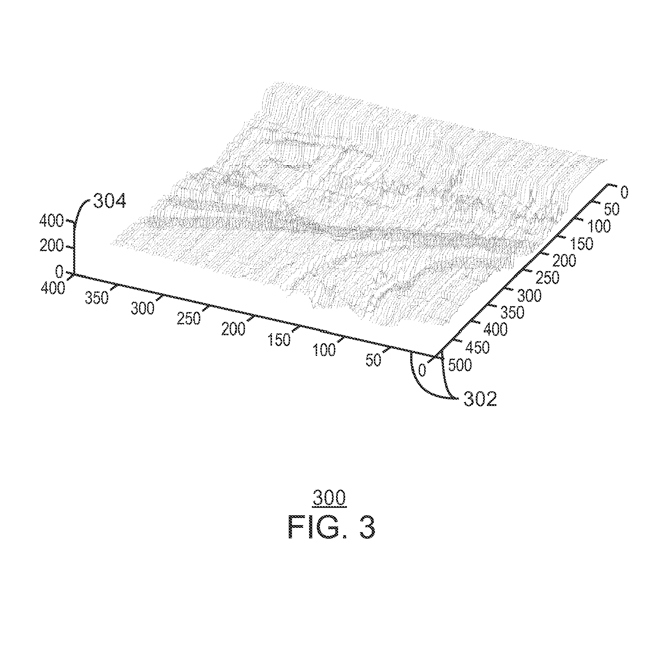

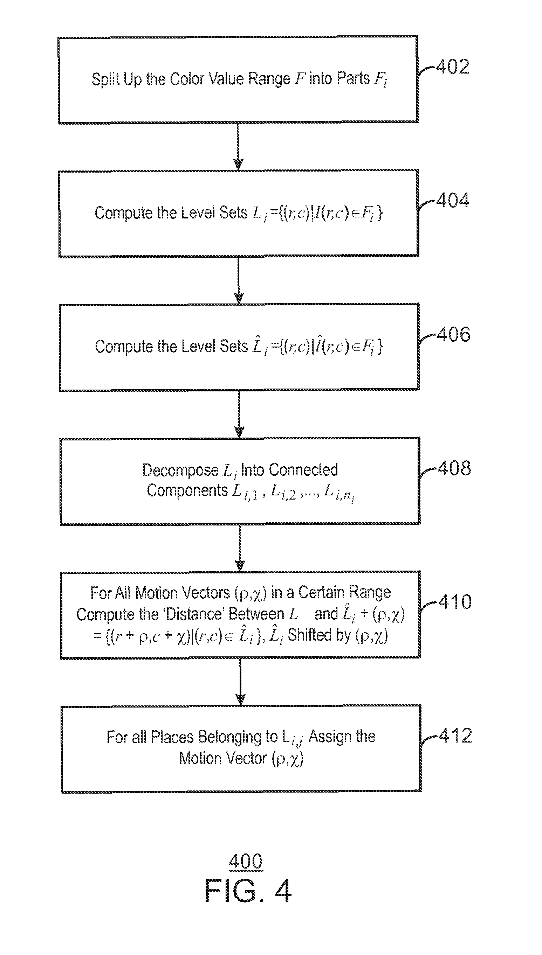

Fig. 3 is a drawing 300 of the first frame 102 of Fig. 1 represented as a function, in accordance with an exemplary embodiment of the present techniques. In the drawing 300, the x and y axes 302 represent the physical location ($r$, $c$) of the pixels. The z-axis 304 represents the color or intensity of the pixels ($F$). The use of this function to decompose the image may be better understood by referring to the method shown in Fig. 4.

Fig. 4 is a process flow diagram of a general method 400 for motion estimation, in accordance with an exemplary embodiment of the present techniques. The method 400 begins at block 402 by dividing up the color value range $F$ into parts $F_i$. The parts do not have to be wholly independent, but may intersect one another. For example, if $F = \{0,1,..., 255\}$ a range function such as $F_i = \{16 \cdot i,...,16 \cdot i + 20\}$ may be selected. As indicated at block 404, level sets may be computed for the image from the ranges selected according to the function shown in Eqn. 3.

$$L_i = \left\{(r,c) \big| I(r,c) \in F_i\right\}$$

Eqn. 3

At block 406, level sets for the image of comparison may be computed using the same ranges selected, according to the function shown in Eqn. 4.

$$\hat{L}_i = \left\{(r,c) \big| \hat{I}(r,c) \in F_i\right\}$$

Eqn. 4

At block 408, $L_i$ may be decomposed into connected components $L_{i,1}, L_{i,2},..., L_{i,ni}$. In an exemplary embodiment, each connected component $L_{i,j}$ may include regions of pixels such that for any two pixels ($r_1,c_1$) and ($r_2,c_2$) there is a path inside $L_{i,j}$ connecting those two pixel locations, for example, the component $L_{i,j}$ is contiguous. At block 410, for all motion vectors ($\rho,\chi$) in a certain range a distance may be computed between $L_{i,j}$ and $\hat{L}_i + (\rho,\chi) = \{(r + \rho,c + \chi)|(r,c) \in \hat{L}_i\}$, $\hat{L}_i$ shifted by the motion vector($\rho,\chi$). The motion vector ($\rho,\chi$) giving the best match with the smallest distance is then selected as the motion. At block 412, all pixel locations belonging to $L_{i,j}$ are assign the same motion vector ($\rho,\chi$), assumed to be part of the same object, moving together as a unit.

The procedure used to determine the best match is important to the outcome of the algorithm. More specifically, the 'distance' used may one or a combination of the mean color values distance, the percentage of area that the level sets differ, the size of the intersecting area between the sets, or the size of the boundary pixels that the level sets have in common, among others. In scenes with a lot of image structure this strategy may give sufficient motion estimation.

However, experimental results indicate that a rigid splitting of the range into $F_i$ may not give satisfactory outcome. For example, very small components may be hard to estimate and may corrupt the result. Further, objects in the same color range may be connected by bridges, making estimation of the motion difficult. Very large components may fall apart non-naturally, due to by an unsuitable splitting of $F_i$. Further, at the boundary of the image, objects may disappear. This effect may be mitigated by the use of a border around frames.

Bridged objects may be separated by standard image processing operations, such as the erosion and dilation morphological operators, which are well known in the art. Generally, dilation expands a component in an image object and erosion shrinks the component. These operators may be used for opening or closing the components of an image. Opening generally will smooth a contour in an image, breaking narrow isthmuses and eliminating thin protrusions. Closing tends to narrow smooth sections of contours, fusing narrow breaks and long thin gulfs, eliminating small holes, and filling gaps in contours.

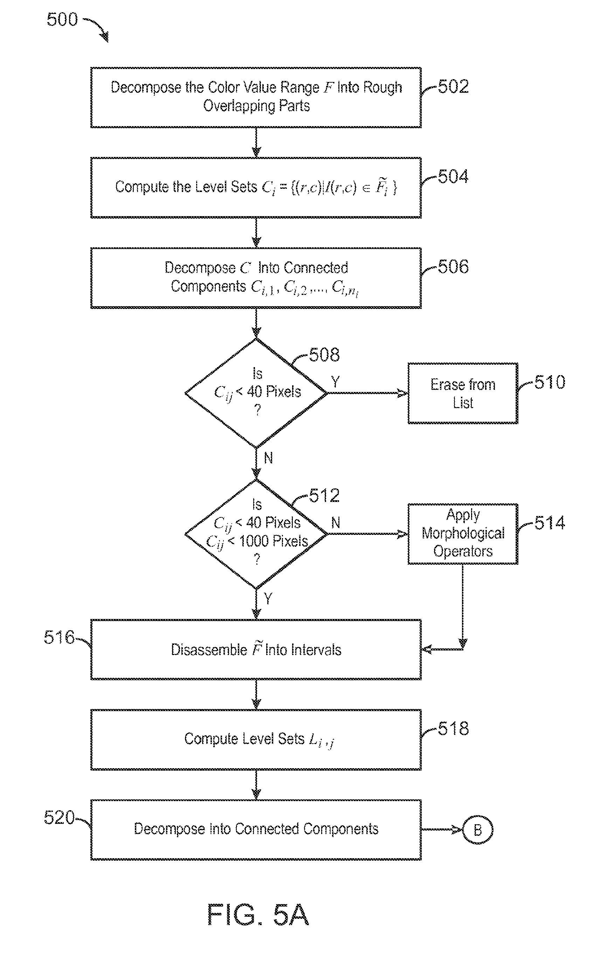

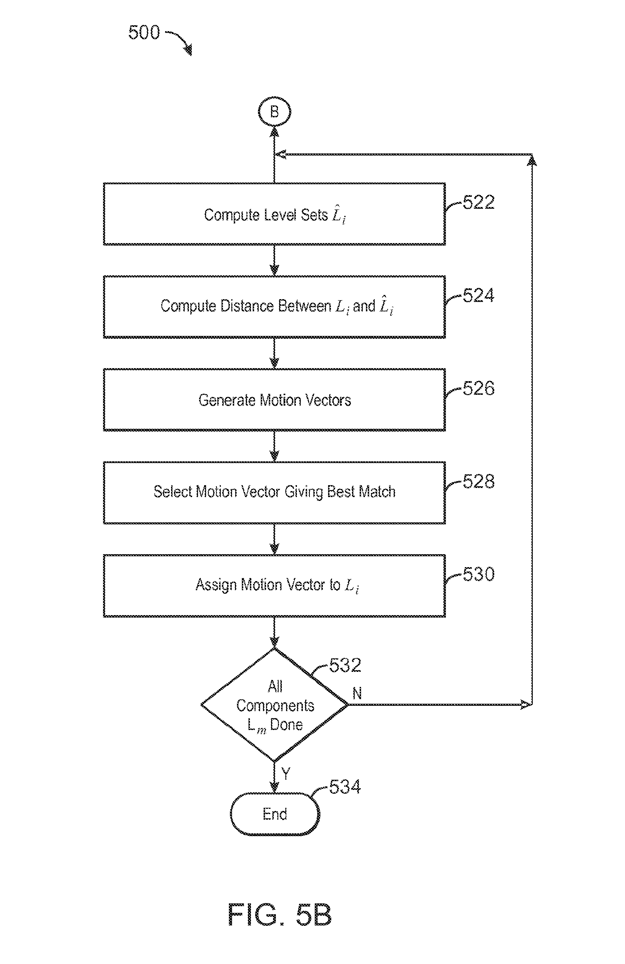

Figs. 5A and 5B show a process flow diagram of an adaptive method 500 for estimating the motion of objects in a sequence of images, in accordance with an exemplary embodiment of the present techniques. The adaptive method 500 starts at block 502, shown in Fig. 5A, with the decomposition of the color value range $F$ into rough overlapping parts. For example, in an exemplary embodiment, $F = \{0,1,...,255\}$ could be divided into the ranges $\tilde{F}_1 = \{0,1,...,63\}$, $\tilde{F}_2 = \{48,49,...,111\},..., \tilde{F}_5 = \{192,193,...,255\}$. These ranges are not limited to the values shown. At block 504, the level sets $C_i = \{(r,c)|I(r,c) \in \tilde{F}_i\}$ for the image are computed. Based on the level sets, at block 506, $C_i$ may be decomposed into connected components $C_{i,1}, C_{i,2},...,C_{i,ni}$, wherein each component represents a group of connected pixel locations in the image and which may represent a single object.

At block 508, a determination is made as to whether a particular component, $C_{i,j}$, is too small for further processing, for example, less than 40 pixels in total area. If so, at block 510, it may be erased from the list without further analysis. At block 512, a determination is made as to whether $C_{i,j}$ is small enough to be treated as an individual object without further processing, for example, covering between 40-1000 pixels in area. If not, at block 514, morphological operations such as an 'open' followed by a 'close' may be performed on $C_{i,j}$ to eliminate conjunctions between larger parts. The remaining parts are then decomposed into separate connected components. The procedure in blocks 508-514 is repeated for each connected component identified in block 506. Overall, this results in a refined list of connected components or objects, that may be termed $L_1, L_2,..., L_n$.

At block 516, for each component $L_i$ that exceeds a certain size, the frequency of color values may be evaluated and the corresponding color range $\tilde{F}$ disassembled into intervals $\tilde{F} = \tilde{F}_{I,1} \cup \tilde{F}_{I,2} \cup...\cup \tilde{F}_{I,t}$, based on the low levels in the color value histogram. At block 518, the corresponding level sets $L_{i,j} = \{(r,c) \in L_i | I(r,c) \in F_{I,j}\}$ may be computed. At block 520, the level sets may be decomposed into a connected components that do not have to be undersized. This results in a new list of connected components, $L_1, L_2,..., L_m$. For each component $L_i$ there is a color value range $F_i$, i.e., $I(r,c) \in F_i$ for $(r,c) \in L_i$.

The operations discussed with respect to Blocks 502-520 may be repeated for each image in a sequence of images, for example, corresponding to a single scene. Thus, a set of components may be generated for every image in each scene.

At block 522 shown in Fig. 5B, the level sets $\hat{L}_i = \{(r,c)|\hat{I}(r,c) \in F_i\}$ are computed for the image of comparison. At block 524, for all motion vectors $(\rho,\chi)$ in a selected range, the 'distance' between $L_i$ and $\hat{L}_i + (\rho,\chi) := \{(r+p,c+\chi)|(r,c) \in L_i\}$, may be computed. At block 526, this provides the motion vector, that is shifted by $(\rho,\chi)$, for the image of comparison. At block 528, the motion vector that provides the best match, for example, having the smallest distance, may be selected. At block 530, all pixel locations belonging to a certain $L_i$ may be assigned the motion vector $(\rho,\chi)$, indicating that all parts of the object are moving at the same rate. At block 532, a determination is made as to whether the analysis of all of the components or objects in the image is finished. For any objects that are not analyzed by the treatment above, a combination of classical motion estimation algorithms and inpainting algorithms may be used to define motion vectors. Once all components have been analyzed, the method 500 may end at block 534.

As mentioned before, the techniques discussed above may ensure that shift motion yields identical motion vectors. Thus, small blotches such as random pixel shapes will not affect the motion vector computation. Further, in the techniques provided the shape of an object may be as important as the color values of the object.

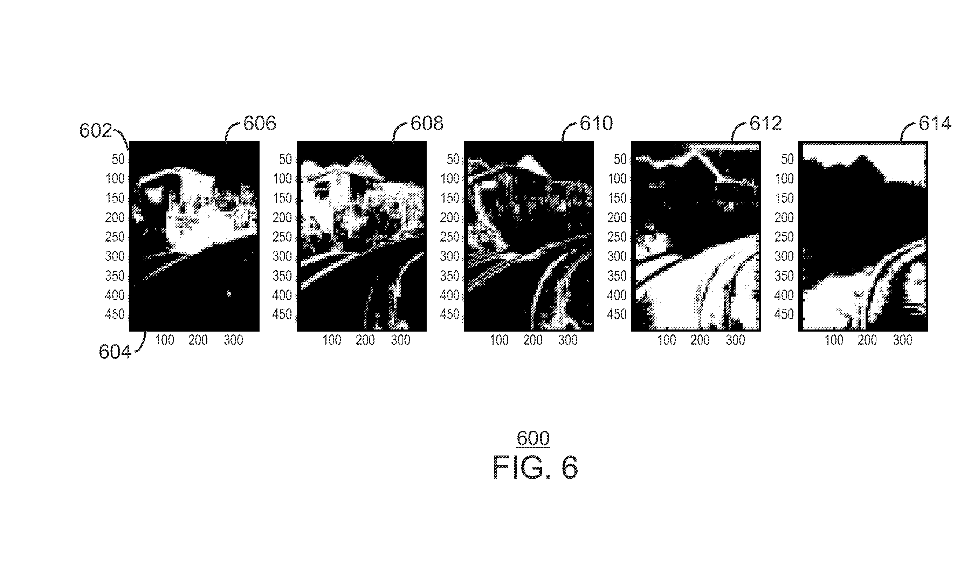

As an example, an exemplary embodiment of the present techniques was used to analyze a video sequence from the public domain, in particular, the "Mount" movie available from the Prelinger Archive at www.archive.org. The images $I$ and $\hat{I}$ are depicted in the second frame 104 and the third frame 106 of Fig. 1, respectively. To begin, the color value was divided into five ranges: $\tilde{F}_1 = \{0,1,...,63\}$; $\tilde{F}_2 = \{48,49,...,111\}$; $\tilde{F}_3 = \{96,97,...,159\}$; $\tilde{F}_4 = \{144,145,...,207\}$; and $\tilde{F}_5 = \{192,193,...,255\}$. This provided five level sets, as indicated in Fig. 6.

Fig. 6 is a set 600 of images generated from an initial image using five level ranges, in accordance with an exemplary embodiment of the present techniques. For each image, the y-axis 602 represents the row, r, of the pixels, and the x-axis 604 represents the column, c, of the pixels. In each level set, a white pixel is within the range and a block pixel is outside of the range. Thus, white pixels in the first image 606 are in the range of $\tilde{F}_1 = \{0,1,...,63\}$. Similarly, white pixels in the second image 608 are in the range of $\widetilde{F}_2$ = {48,49,...,111}, white pixels in the third image 610 are in the range of $\widetilde{F}_3$ = {96,97,...,159}, white pixels in the fourth image 612 are in the range of $\widetilde{F}_4$ = {144,145,...,207}, and white pixels in the fifth image 614 are in the range of $\widetilde{F}_5$ = {192,193,...,255}.

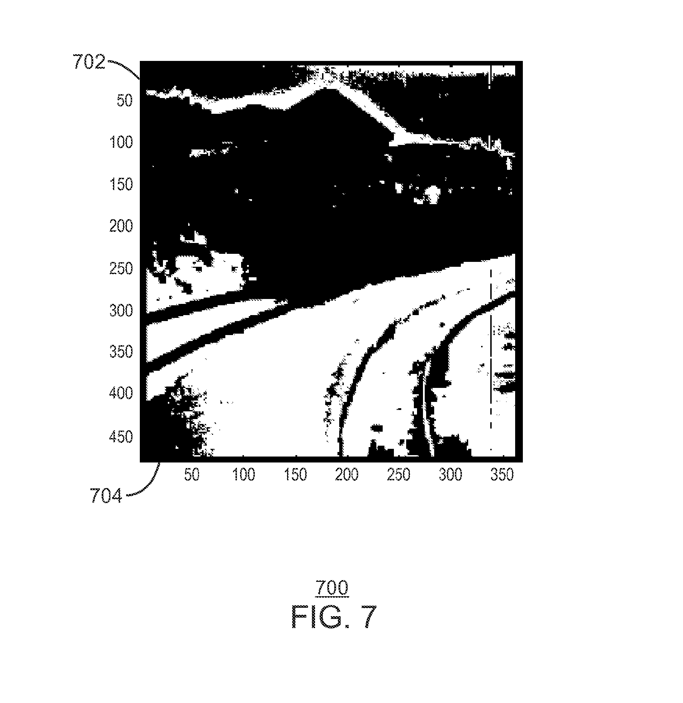

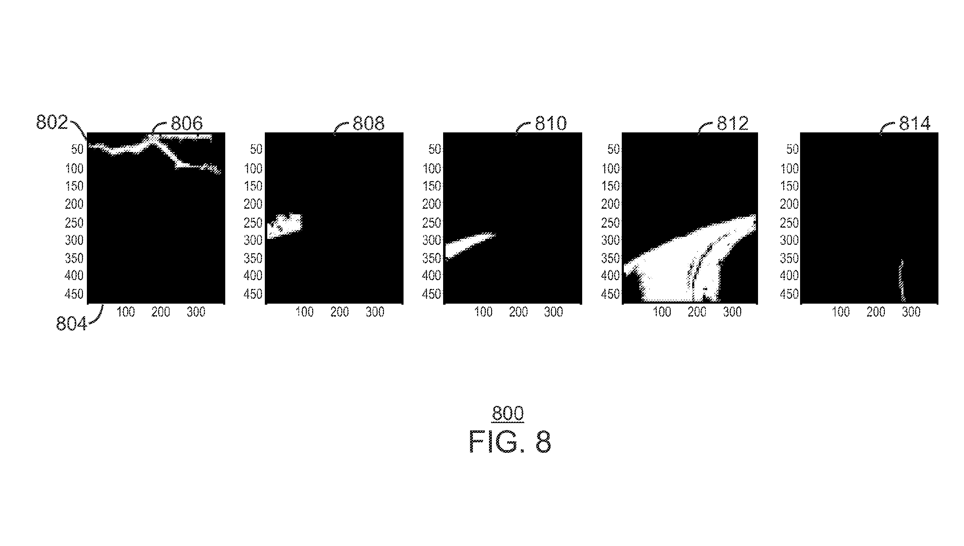

Fig. 7 is a larger view 700 of the fourth image 612 from Fig. 6, in accordance with an exemplary embodiment of the present techniques. As for Fig. 6, the y-axis 702 represents the row (r) of each pixel, and the x-axis 704 represents the column (c) of each pixel. This image may be further decomposed into the individual unconnected components, in other words, individual components separated by black pixels, as shown in Fig. 8.

Fig. 8 is a set 800 of images showing the first five components identified in the image shown in Fig. 6, in accordance with an exemplary embodiment of the present techniques. As for the previous figures, the y-axis 802 of each component image represents the row (r) of each pixel, and the x-axis 804 of each image represents the column (c) of each pixel. The first image 806 is of a frayed component that may include more than one object. Other components are of various sizes, including the second ,third, and fifth images 808, 810 and 814, as well as a very large components shown in the fourth image 812. Larger connected components may be passed through morphological filters to enhance the analysis of particular objects.

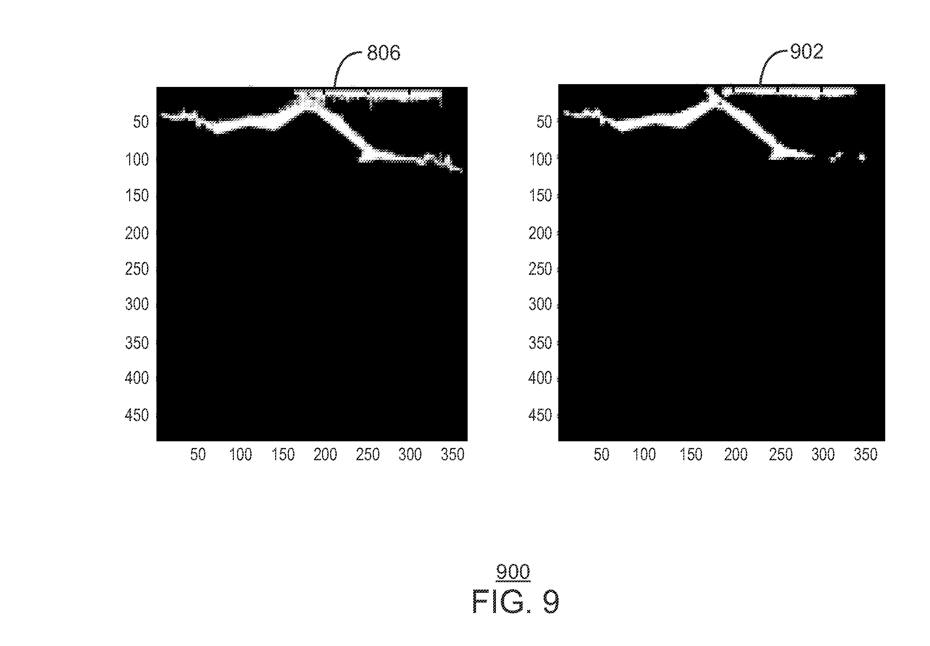

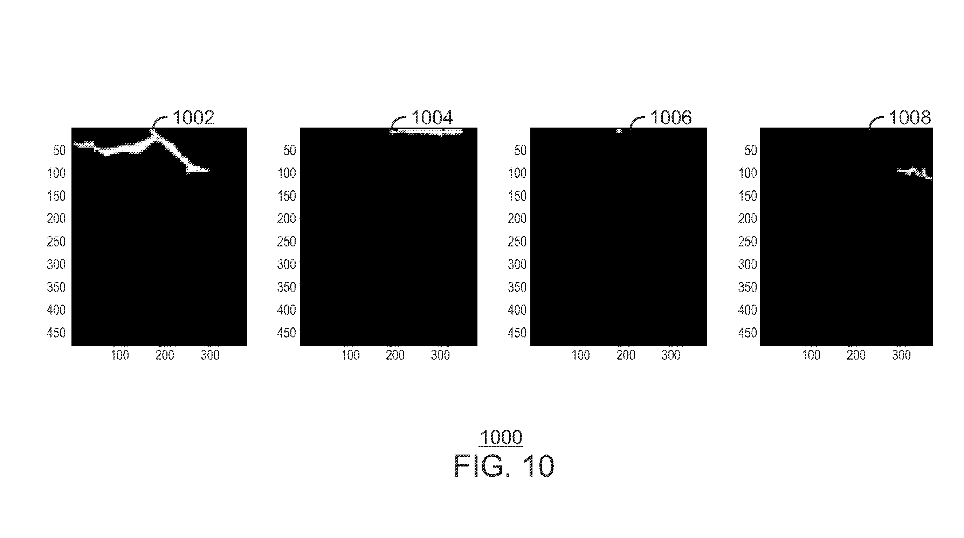

Fig. 9 is a set 900 of images showing the morphological filtering of the first image 806 of Fig. 8, in accordance with an exemplary embodiment of the present technique. The axes are as defined for the previous figures. More specifically, in this example, an open filter was followed by a close filter, resulting in the separation of the larger frayed component into a number of smaller individual components, as shown in image 902. These subcomponents are shown in greater detail in Fig. 10.

Fig. 10 shows a set 1000 of images illustrating the separate components isolated by morphological filtering the of the first image 806 in Fig. 8, in accordance with an exemplary embodiment of the present techniques. For the connected component shown in image 806 shown in Fig. 8, the filtering procedure breaks up the larger connected component into smaller components, as shown in image 1002, image 1004, image 1006, and image 1008. Thus, each image 1002, 1004, 1006, or 1008 may represent an individual object in the analysis image (frame 104 of Fig. 1). However, for very large connected components, such as the component shown in the fourth image 812 of Fig. 8, this procedure may not provide decomposition.

Accordingly, for larger components a color value distribution may be used to separate individual components.

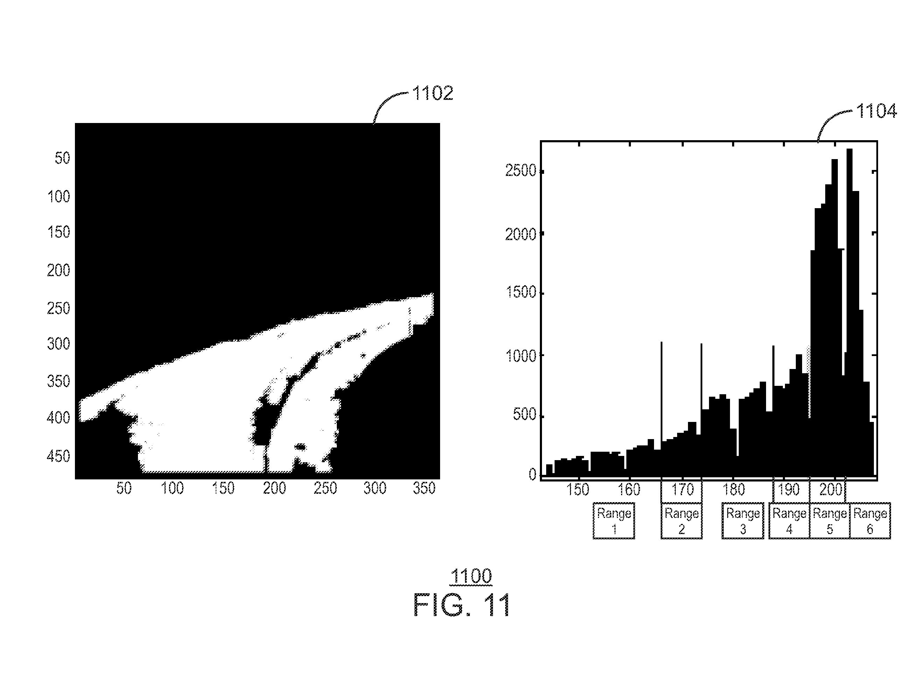

Fig. 11 is an illustration 1100 showing the fourth image 812 of Fig. 8 along with an associated graph 1104 of the color value distribution in the image 1102, in accordance with an exemplary embodiment of the present techniques. As discussed with respect to Fig. 8, this image was initially generated by applying a white pixel value to any pixel in the range $\widetilde{F}_4$ = {144,145,...,207} in the initial image shown in the second frame 104 of Fig. 1. To divide this very large component into smaller components, a similar procedure to the first division discussed with respect to Fig. 6 may be performed. In this example, the color values were further divided into six smaller ranges, [144:167], [166;175], ... ,[202; 207]. The graph 1104 illustrates the frequency of color values present in each of the six ranges.

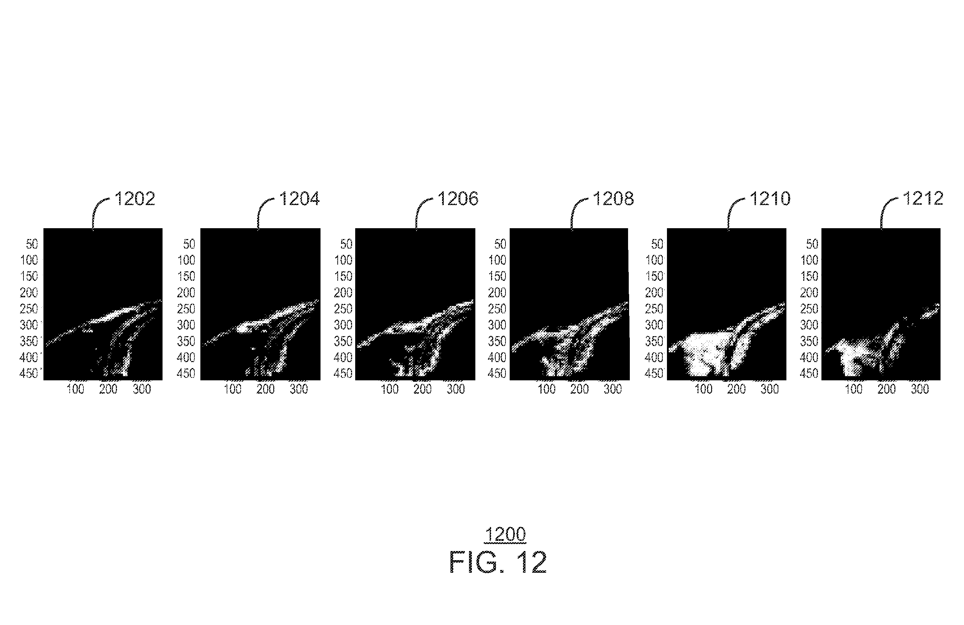

Fig. 12 is a set 1200 of six images 1202, 1204, 1206, 1208, 1210, and 1212 showing the results obtained by dividing the image 1102 of Fig. 11 into the six levels shown in the graph 1104 of Fig. 11, in accordance with exemplary embodiments of the present techniques. This subdivision procedure generates a list of connected components of the image 1102, about 358 in this example, each of which are not too small to be erased yet small enough to not require further processing. The image for comparison depicted in the third frame 106 of Fig. 1 shows similar connected components for the same color range.

Finally, the components identified in each image are matched to identify the corresponding components in the image of comparison. For example, image 1002, discussed with respect to Fig. 10, may be used as an example. In this component, the gray color values varied between 144 and 207.

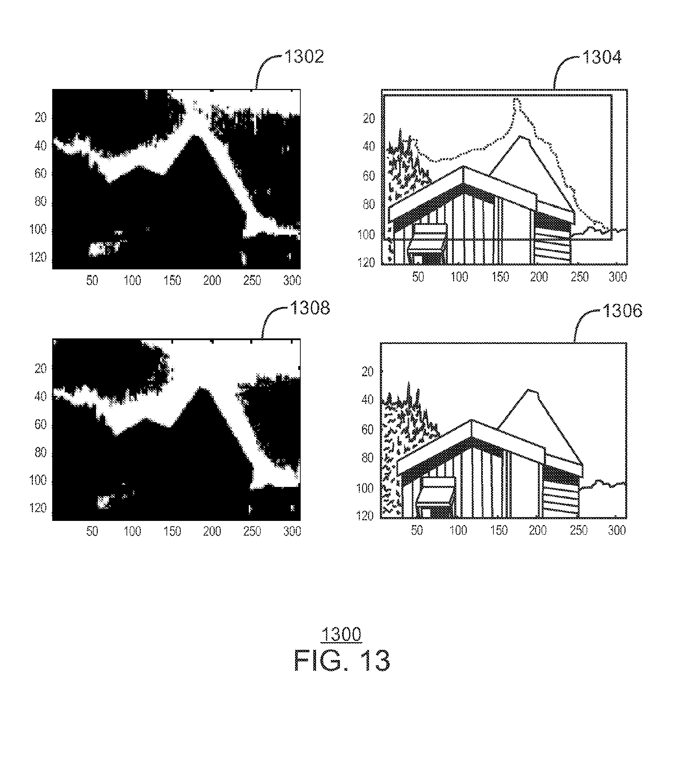

Fig. 13 is an illustration 1300 of components in an image and in an image of comparison prior to matching, in accordance with exemplary embodiments of the present techniques. The task is to find the components in the image of comparison that correspond to the components in the image. For this purpose each component is displaced in each direction and compared to the 'shape' and 'color' of the component in the image of comparison. To perform this function, the components in the image 1302 are each shifted in each direction, and compared to the levels for the image of comparison 1306, as seen in Fig. 1308. As can be seen in Fig. 13, there is a displacement to the right.

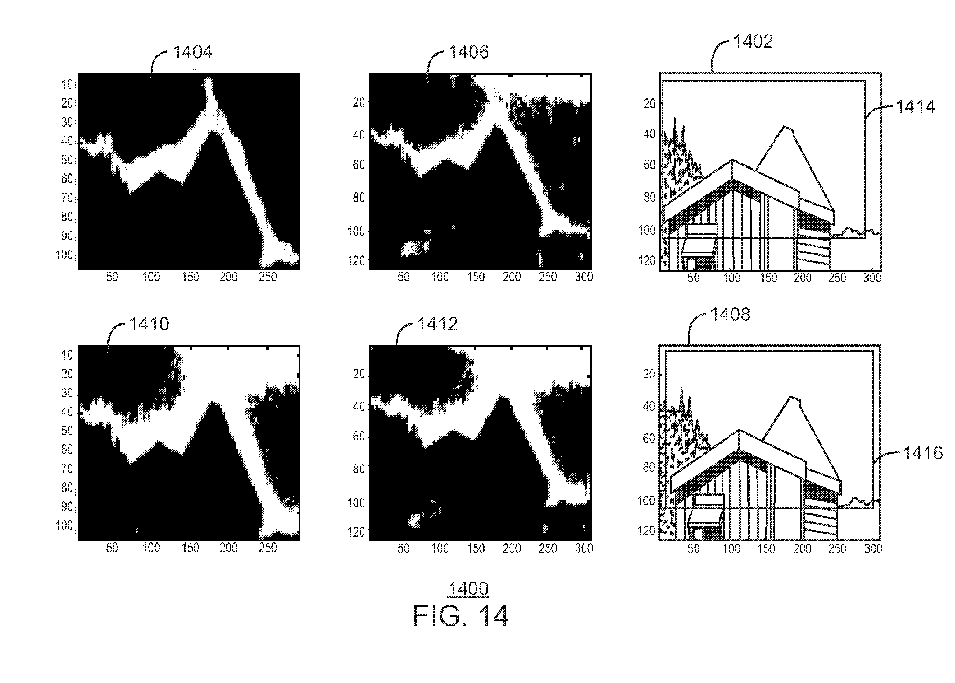

Fig. 14 is a set of images illustrating the matching process, in accordance with an exemplary embodiment of the present techniques. Image 1402 is the initial image corresponding to the second frame 104 discussed with respect to Fig. 1. In this image 1402, a first component is identified, as seen in image 1404. Image 1404 is generated by morphological processing of pixels from the image 1402 that lie within a particular level range as shown in image 1406. The image of comparison 1408 corresponding to the third frame 106, discussed with respect to Fig. 1 is processed to generate an image 1410 with the same levels. This is shifted to generate a best match image 1412 to the component image 1404. The result of the best match in the image 1402 is indicated by a first box 1414. The matched content for the image of comparison 1408 is indicated by another box 1416. As can be seen, the analysis indicates that the matching content has shifted to the right between the second frame 104 and the third frame 106. This shift may be used to estimate the motion of components in the images.

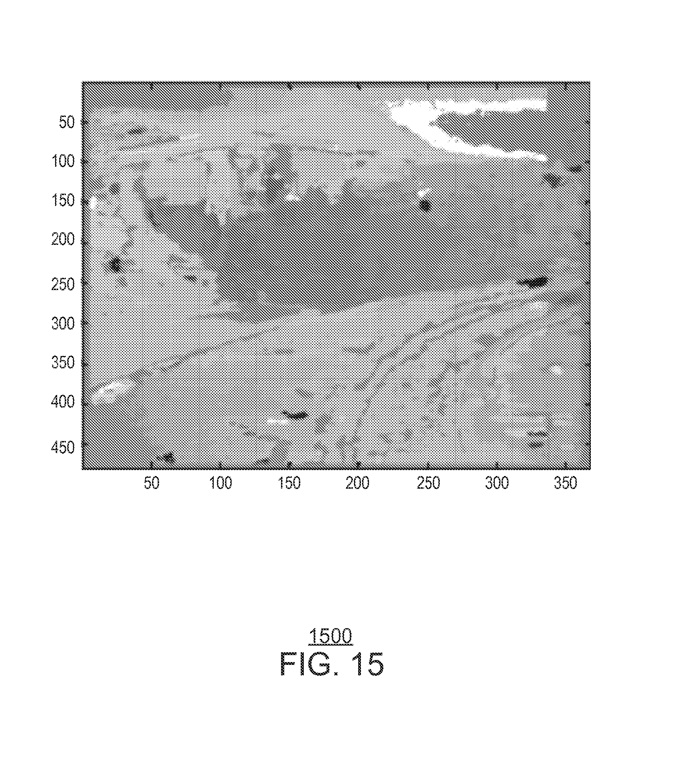

Fig. 15 is a graph 1500 of the horizontal part of a set of motion vectors calculated from Figs. 13 and 14, in accordance with an exemplary embodiment of the present techniques. As can be seen from this graph 1500, the motion of the train can be determined by the present techniques.

The motion vectors may be used to locate data in previous or subsequent frames that is obscured by scratches or other defects in a particular image. The data may then be used to fill in the defective areas.

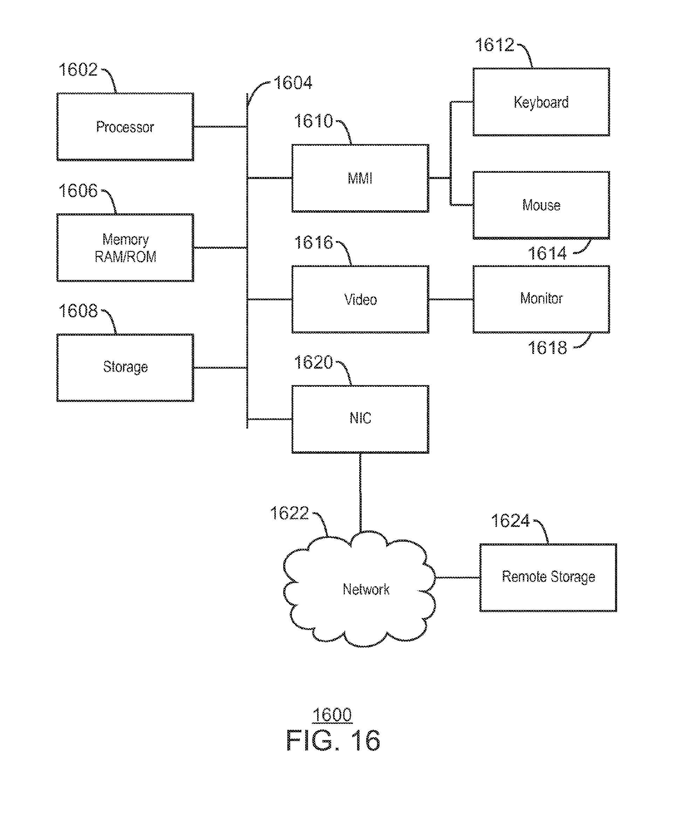

Fig. 16 is a block diagram of a computing system 1600 that may be used to implement the techniques described above, in accordance with exemplary embodiments of the present invention. As shown in Fig. 16, the computing system 1600 has a processor 1602 coupled to a bus 1604. The processor 1602 may include a single central processing unit or CPU or may include multiple CPUs in a computing cluster. The bus 1604 may be a standard bus used for a single computer system, such as PCI or PCIe, among others, and may be a high speed bus used for communications between computing clusters. The computing system 1600 may have memory 1606 attached the bus 1604, which may include tangible, machine readable memory devices such as random access memory or RAM, and/or read only memory or ROM. The memory 1606 may be used for the storage of code and data used to implement exemplary embodiments of the techniques discussed herein.

The computing system 1600 may also include one or more storage systems 1608, such as hard drives, hard drive arrays, flash drives, holographic storage media, or any other suitable tangible, machine readable storage device. The storage system 1608 may be used for the long term storage of code, data, and intermediate results used in exemplary embodiments of the present techniques.

A man-machine interface, or MMI 1610, may be attached to the bus 1604 to interface a keyboard 1612, mouse 1614, or other input devices, with the computing system 1600. A video adapter 1616 may be used to drive a monitor 1618 from the bus 1604. the monitor 1618 may be used to display images, video, analysis graphics, and intermediate results in exemplary embodiments of the present techniques.

A network interface card or NIC 1620 may be coupled to the bus 1604 for interfacing to a network 1622, including a local area network or LAN, a wide area network or WAN, or the Internet. The connection to the network 1622 may be useful for accessing videos located on remote storage devices 1624, such as remote Websites.

One of ordinary skill will appreciate that combining any of the above-recited features of the present invention together may be desirable.

**Claims**

1.  A method (500) of processing image data, comprising:

    dividing (506) each of a first plurality of images corresponding to a plurality of color value ranges into a first plurality of components of contiguous pixels;
    dividing (522) each of a second plurality of images corresponding to the plurality of color value ranges into a second plurality of components of contiguous pixels; and
    identifying (526) a plurality of motion vectors that generate a smallest distance between the first plurality of components and the second plurality of components, wherein the distance comprises a difference in color values.

2.  The method (500) of claim 1, wherein the color values represent gray scale intensity in an image.

3.  The method (500) of claim 1, wherein each of the components represents an object in an image.

4.  The method (500) of claim 1, comprising dividing a component from the first plurality of components into a plurality of smaller components based at least in part on a plurality of narrower ranges.

5.  The method (500) of claim 1, comprising performing a morphological transformation on any one of the first plurality of components.

6.  The method (500) of claim 5, wherein the morphological transformation is performed on any one of the plurality of components that is greater than 1000 pixels in area.

7.  The method (500) of claim 1, comprising assigning each of the plurality of motion vectors to a corresponding one of the first plurality of components.

8.  The method (500) of claim 1, wherein each image of the first plurality of images is in a sequence with an image from the second plurality of images.

9. The method (500) of claim 1, comprising discarding any one of the first plurality of components that is smaller than 40 pixels in area.

10. The method (500) of claim 1, comprising restoring data in a video image based at least in part on the plurality of motion vectors.

11. A system (1600) for processing image data, comprising:

a processor (1602);
a storage device (1608); and
a tangible, machine readable memory (1606) comprising code configured to direct the processor to:

access video data comprising a plurality of images on the storage device;
divide each of a first plurality of images corresponding to a plurality of color value ranges into a first plurality of components of contiguous pixels;
divide each of a second plurality of images corresponding to the plurality of color value ranges into a plurality of sets; and
identify a plurality of motion vectors that generate a smallest distance between the first plurality of components and the plurality of sets, wherein the distance comprises a difference in color values.

12. The system (1600) of claim 11, wherein the tangible, machine readable memory comprises code configured to direct the processor to restore data in a video image based, at least in part, upon the plurality of motion vectors.

13. The system (1600) of claim 11, wherein the tangible, machine readable memory comprises code configured to direct the processor to assign each of the plurality of motion vectors to a corresponding one of the plurality of components.

14. The system (1600) of claim 11, comprising a monitor, wherein the code is configured to display the results of the calculations on the monitor.

15. The system (1600) of claim 11, comprising a network interface card, wherein the code is configured to access video data on remote systems.

100

FIG. 1

FIG. 2

200

300
FIG. 3

Split Up the Color Value Range $F$ into Parts $F_i$ ⟶ 402

Compute the Level Sets $L_i = \{(r,c)|I(r,c) \in F_i\}$ ⟶ 404

Compute the Level Sets $\hat{L}_i = \{(r,c)|\hat{I}(r,c) \in F_i\}$ ⟶ 406

Decompose $L_i$ Into Connected Components $L_{i,1}, L_{i,2}, ..., L_{i,n_i}$ ⟶ 408

For All Motion Vectors $(\rho,\chi)$ in a Certain Range Compute the 'Distance' Between $L$ and $\hat{L}_i + (\rho,\chi)$ $= \{(r+\rho, c+\chi)|(r,c) \in \hat{L}_i\}$, $\hat{L}_i$ Shifted by $(\rho,\chi)$ ⟶ 410

For all Places Belonging to $L_{i,j}$ Assign the Motion Vector $(\rho,\chi)$ ⟶ 412

<u>400</u>

FIG. 4

**FIG. 5A**

Flow chart 500:

- 502 — Decompose the Color Value Range $F$ Into Rough Overlapping Parts
- 504 — Compute the Level Sets $C_i = \{(r,c)|I(r,c) \in \tilde{F}_i\}$
- 506 — Decompose $C$ Into Connected Components $C_{i,1}, C_{i,2}, ..., C_{i,n_i}$
- 508 — Is $C_{ij} < 40$ Pixels ?
  - Y → 510 — Erase from List
  - N ↓
- 512 — Is $C_{ij} < 40$ Pixels $C_{ij} < 1000$ Pixels ?
  - N → 514 — Apply Morphological Operators
  - Y ↓
- 516 — Disassemble $\tilde{F}$ Into Intervals
- 518 — Compute Level Sets $L_{i,j}$
- 520 — Decompose Into Connected Components → B

500

Compute Level Sets $\hat{L}_i$ —522

Compute Distance Between $L_i$ and $\hat{L}_i$ —524

Generate Motion Vectors —526

Select Motion Vector Giving Best Match —528

Assign Motion Vector to $L_i$ —530

532

All Components $L_m$ Done — N

Y

End —534

FIG. 5B

600
FIG. 6

702

704

700

FIG. 7

<u>800</u>

FIG. 8

FIG. 9
900

FIG. 10

EP 2 345 997 A1

1102

1104

Range 1

Range 2

Range 3

Range 4

Range 5

Range 6

1100

FIG. 11

1200
FIG. 12

1300

FIG. 13

FIG. 14
1400

1500

FIG. 15

1602 Processor
1604
1606 Memory RAM/ROM
1608 Storage
1610 MMI
1612 Keyboard
1614 Mouse
1616 Video
1618 Monitor
1620 NIC
1622 Network
1624 Remote Storage

1600
FIG. 16

Europäisches
Patentamt

European
Patent Office

Office européen
des brevets

# EUROPEAN SEARCH REPORT

Application Number

EP 10 15 1102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEISELE B ET AL: "Obstacle detection based on color blob flow" INTELLIGENT VEHICLES '95 SYMPOSIUM., PROCEEDINGS OF THE DETROIT, MI, USA 25-26 SEPT. 1995, NEW YORK, NY, USA,IEEE, US LNKD- DOI:10.1109/IVS.1995.528294, 25 September 1995 (1995-09-25), pages 282-286, XP010194130 ISBN: 978-0-7803-2983-6 | 1,3,5-9, 11,13-15 | INV. G06T7/20 |
| Y | * the whole document * | 10,12 | |
| X | SUNG-JEA KO ET AL: "DIGITAL IMAGE STABILIZING ALGORITHMS BASED ON BIT-PLANE MATCHING" 19980801, vol. 44, no. 3, 1 August 1998 (1998-08-01) , pages 617-622, XP011083652 | 1,2,4-9, 13-15 | |
| Y | * page 618 * | 10,12 | |
| X | REHRMANN V: "OBJECT ORIENTED MOTION ESTIMATION IN COLOR IMAGE SEQUENCES" EUROPEAN CONFERENCE ON COMPUTER VISION, BERLIN, DE, vol. 1, 2 June 1998 (1998-06-02), pages 704-719, XP000926326 | 1,5-9, 13-15 | TECHNICAL FIELDS SEARCHED (IPC) |
| Y | * page 705 - page 711 * | 10,12 | G06T |
| Y | KOKARAM A C: "On Missing Data Treatment for Degraded Video and Film Archives: A Survey and a New Bayesian Approach" IEEE TRANSACTIONS ON IMAGE PROCESSING, IEEE SERVICE CENTER, PISCATAWAY, NJ, US LNKD- DOI:10.1109/TIP.2004.823815, vol. 13, no. 3, 1 March 2004 (2004-03-01), pages 397-415, XP011109631 ISSN: 1057-7149 * page 401 * | 10,12 | |

The present search report has been drawn up for all claims

| Place of search | Date of completion of the search | Examiner |
|---|---|---|
| Munich | 30 June 2010 | Rockinger, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002159749 A, Koblansky

- JP 2003256849 A

**Non-patent literature cited in the description**

- **KORKARAM, A.** MOTION PICTURE RESTORATION: DIGITAL ALGORITHMS FOR ARTEFACT SUPPRESSION IN DEGRADED MOTION PICTURE FILM AND VIDEO. Springer-Verlag, 1998